# EUROPEAN PATENT APPLICATION

(11) **EP 2 384 646 A2**
(43) Date of publication of application: **09.11.2011**
(21) Application number: 10736051.3
(22) Date of filing: 01.02.2010
(51) Int. Cl.: A23J 1/06, A23J 3/12, A22B 5/04

(54) **BLOOD WASTE TREATMENT SYSTEM FOR SLAUGHTERED ANIMALS, AND METHOD FOR PRODUCING HIGH QUALITY AMINO ACID SOLUTION USING BLOOD WASTE**

(30) Priority: 30.01.2009 KR 20090007520
(71) Applicant: Hanshinn International Corp., Seoul 137-820 (KR); Shinn, Tae-Yong, Seoul 137-827 (KR)
(72) Inventor: HAN, Myeong Gyu, Yeosu-si Jeollanam-do 555-060 (KR); PARK, Deok Gyu, Eumseong-gun Chungcheongbuk-do 369-843 (KR)
(74) Representative: von Kreisler Selting Werner
(86) International application number: PCT/KR2010/000586
(87) International publication number: WO 2010/087660

(57) **Abstract**

The present invention provides a system for treating the blood of slaughtered animals, the system comprising: a storage tank for collecting and storing the blood of animals slaughtered in a slaughter plant; a blood treatment tank in which the animal blood is received and stored from the blood storage tank and into which a liquid microbial agent for treating blood is introduced so that microorganisms of the liquid microbial agent are allowed to react at a temperature of 25~35 °C for 8-12 hours, thereby separating the animal blood into an amino acid solution and a waste blood sludge; a blood-treating agent supply unit for supplying the liquid microbial agent to the blood treatment tank; a water supply unit for supplying water to the blood treatment tank; a filtering means for filtering the amino acid solution discharged from the blood treatment tank to remove impurities; a heater for maintaining the blood treatment tank at a temperature of 25~35 °C; and a temperature sensor for sensing the internal temperature of the blood treatment tank. According to the invention, microorganisms are used to degrade waste animal blood and produce high-quality environmentally friendly amino acids, thereby providing the effects of recycling resources and preventing environmental contamination.

## Description

### BACKGROUND OF THE INVENTION

### Field of the Invention

The present invention relates to a system for treating the blood of slaughtered animals and a method for producing a high-quality amino acid solution using the blood of slaughtered animals, and more particularly to a system for treating the blood of slaughtered animals and a method for producing a high-quality amino acid solution using the blood of slaughtered animals, wherein a newly developed special microbial agent for treating blood is added to animal blood occurring during a process of slaughtering domestic animals so that the organic components (e.g., proteins) of the blood are completely dissolved within a short time, thereby producing a high-quality amino acid solution which can be advantageously used in various applications, including raw materials for producing fertilizers, drugs and the like, thereby providing the effects of recycling resources and preventing environmental contamination.

### Description of the Prior Art

In recent years, as the food consumption pattern of Korean people has been westernized, the consumption of meats has continuously increased, and thus the number of domestic animals slaughtered in slaughter plants in Korea increased every year.

Currently, in Korea, there are about 100 slaughter plants for slaughtering cattle, pigs, chickens and the like, and a significantly large amount (more than 70,000 tons per year) of blood flows out from domestic animals slaughtered in these slaughter plants. Up to date, the blood has been mostly disposed of, and only a portion thereof has been either used as a raw material for drugs in pharmaceutical companies or used to make an animal feed in a dried form, such as blood powder.

However, because the blood of domestic animals can be regarded as a nutrient material which is rich in various proteins, nutrients and minerals, wasting this livestock byproduct rich in nutrients is a waste of resources.

Particularly, the plasma of the blood of domestic animals contains protein components such as albumin and globulin, and the blood cells contain a large amount of the protein hemoglobin. Thus, if these protein components can be easily degraded and treated by a biological or chemical method, useful substances such as amino acids can be recovered from the protein components.

However, in Korea, the blood of domestic animals is mostly disposed of without being recycled as resources, and thus it causes a waste of useful resources and creates serious problems such as environmental contamination.

Meanwhile, the problem associated with the treatment of domestic blood occurring in slaughter plants is becoming more and more serious worldwide.

Currently, in the United States of America, about 6,200 slaughter plants exist, and animal blood occurring in these slaughters is simply being disposed of For this reason, the waste of resources and environmental contamination are becoming serious day by day. Also, in the countries of Southeast Asia, because slaughter plants and the number of slaughtered domestic animals increase every year with an increase in the consumption of meats, the problem of treating the domestic animal blood flowing out during a slaughtering process is becoming more and more serious.

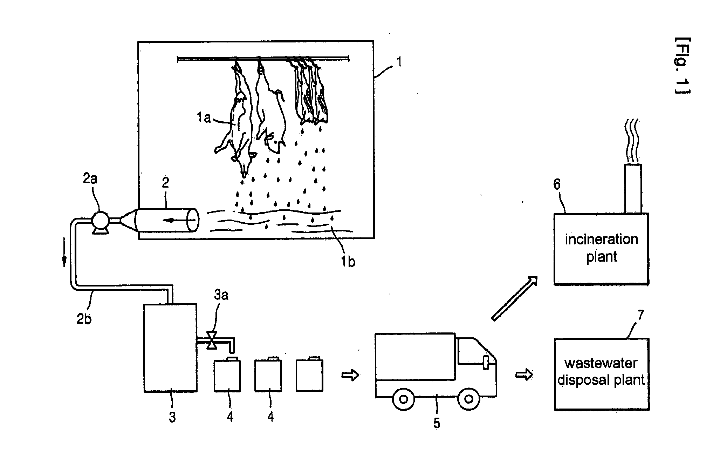

FIG. 1 shows a system for treating the blood of slaughtered animals according to the prior art. A process for treating the domestic animal blood generated in a slaughter plant according to the prior art will now be described with reference to FIG. 1. When domestic animals la are slaughtered in a slaughter plant 1, an animal blood 1b flowing out during the slaughtering process is collected in a specific place through a blood collection pipe 2 disposed in the slaughter plant. Then, the collected blood 1b is transferred into a blood storage tank 3 through a blood transfer pipe 2b by means of a transfer pump 2a, and the blood stored in the blood storage tank 3 is put in, for example, blood barrels 4, and is transferred to an incineration plant 6 or a wastewater disposal 7 by a car 5 and disposed of therein. In FIG. 1, reference numeral 3a indicates a valve provided in the outlet pipe of the blood storage tank 3.

As shown in FIG. 1, conventional methods for disposing of the blood of domestic animals include an incineration method of burning the blood using high-temperature flames in the incineration plant, and a water treatment method of sterilizing the blood using chemicals such as hydrochloric acid in the wastewater disposal plant 7. The two methods were not so satisfactory in terms of cost and results.

The method of incinerating the blood of domestic animals in the incineration plant 6 had a shortcoming in that the incineration cost is increased, because the waste blood is not easily incinerated so that a fuel such as petroleum should be used in a large amount. For this reason, the method of incinerating the waste blood was not frequently used.

Also, the method of disposing of the waste blood in the wastewater disposal plant 7 had a problem in that much time and cost are required to improve the water quality so as to be able to be discharged, because a chemical substance such as highly acidic hydrochloric acid is added in order to dissolve the degradable components of the waste blood, after which the waste blood is sterilized, neutralized and discharged to the outside. If the waste blood-containing water is discharged to the outside in an insufficiently treated state, it will have the risk of causing serious environmental contamination.

In accordance with the related Korean laws, waste animal blood is classified as infectious waste, and thus should be disposed of under the supervision of the Korean Food and Drug Administration, and this waste disposal operation can be conducted only by companies approved as waste disposal companies by the Korean government.

In order for livestock farmers to dispose of waste animal blood under such strict regulations, the cost to be paid to a waste disposal company is significantly high, and thus the disposal of waste animal blood imposes a significant burden on livestock farmers.

As described above, in the prior art, the disposal of waste livestock waste imposed a significant burden in terms of cost and environment. However, in recent years, waste livestock blood has been newly recognized as a recyclable useful resource, departing from the prior viewpoint that the waste livestock blood was simply regarded as waste. Particularly, in advanced industrial nations, including USA and Japan, studies have been attempted to extract useful substances such as proteins and amino acids from waste livestock blood or to recycle the waste livestock blood as a raw material for animal feeds, and as a result, enzyme products that degrade the protein of waste animal blood into amino acids were marketed in Japan. However, the enzyme products marketed by Japanese companies had shortcomings in that they are very inefficient in terms of time, because 70 hours or more is required to degrade the blood components, and also that the enzyme products have low business value, because the concentration of finally produced amino acids is only about 12%.

Accordingly, there has been a need to develop a novel system and method for treating waste livestock blood which can treat the waste livestock blood within the shortest possible time and, at the same time, can sufficiently increase the commercial utility of a product resulting from the treatment to early recover the cost taken for the construction and operation of a waste blood treatment plant and furthermore, can create a significant added value by the operation of the waste blood treatment plant.

Particularly, in recent years, slaughter plants having a sanitary slaughter environment have been newly installed so that it has become possible to collect livestock blood in a sanitary manner. Thus, a base that allows waste livestock blood to be recycled for industrial purposes has been provided. Accordingly, according to this recent industrial trend, there is an increasing need to develop a new technology that can produce useful functional substances from waste livestock blood in a more rapid and cost-effective manner and can safely treat waste livestock blood at the minimum cost.

### SUMMARY OF THE INVENTION

Accordingly, the present invention has been made in view of the problems occurring in the prior art, and it is an object of the present invention to provide a system for treating the blood of slaughtered animals, in which a newly developed special microbial agent for treating blood is added to the blood occurring during a process of slaughtering domestic animals so that the organic components (e.g., proteins) of the blood are completely degraded within a short time, thereby producing a high-quality amino acid solution which can be used for various applications, including a raw material for fertilizers, drugs and the like, thereby providing both the effect of recycling the animal blood as a resource and the effect of preventing environmental contamination caused by the animal blood.

Another object of the present invention is to provide a method for producing an amino acid solution from the blood of slaughtered animals, in which a liquid microbial agent for treating blood is added to the blood of domestic animals so that the protein of the animal blood is rapidly degraded into amino acids, whereby 18 amino acids can be extracted from the animal blood in a high-quality state without damage.

To achieve the above objects, the present invention provides a system for treating the blood of slaughtered animals, the system comprising: a storage tank for collecting and storing the blood of animals slaughtered in a slaughter plant; a blood treatment tank in which the animal blood is received and stored from the blood storage tank and into which a liquid microbial agent for treating blood is introduced so that microorganisms of the liquid microbial agent are allowed to react at a temperature of 25~35 °C for 8-12 hours, thereby separating the animal blood into an amino acid solution and a waste blood sludge; a blood-treating agent supply unit for supplying the liquid microbial agent to the blood treatment tank; a water supply unit for supplying water to the blood treatment tank; a filtering means for filtering the amino acid solution discharged from the blood treatment tank to remove impurities; a heater for maintaining the blood treatment tank at a temperature of 25~35 °C; and a temperature sensor for sensing the internal temperature of the blood treatment tank.

The present invention also provides a method for producing a high-quality amino acid solution using the blood of slaughtered animals, the method comprising the steps of collecting and storing the blood of animals slaughtered in a slaughter plant; supplying each of a liquid microbial agent for treating blood and of water to the animal blood at a ratio of 0.5-5 wt% and allowing microorganisms of the liquid microbial agent to react at a temperature of 25~35 °C for 8-12 hours, thereby separating the animal blood into an amino acid solution and a waste blood sludge; filtering the amino acid solution separated from the animal solution to remove impurities; and sterilizing the amino acid solution, thereby producing an amino acid solution containing 18.66 wt% of 18 essential amino acids.

### BRIEF DESCRIPTION OF THE DRAWINGS

The above and other objects, features and advantages of the present invention will be more clearly understood from the following detailed description taken in conjunction with the accompanying drawing, in which:
FIG. 1 shows a system for treating the blood of slaughtered animals according to the prior art;
FIG. 2 shows a system for treating the blood of slaughtered animals according to the present invention;
FIG. 3 shows a state in which animal blood was separated into a high-quality amino acid solution and a waste blood sludge by the reaction of microorganisms in the blood treatment tank of FIG. 2;
FIG. 4 shows a system for treating the blood of slaughtered animals in which a plurality of blood treatment tanks are arranged in parallel according to the present invention, so that the system can continuously receive and treat animal blood from a slaughter plant;
FIG. 5 shows the composition ratio of a liquid microbial agent for treating blood which is used for the treatment of animal blood in the system for treating the blood of slaughtered animals according to the present invention; and

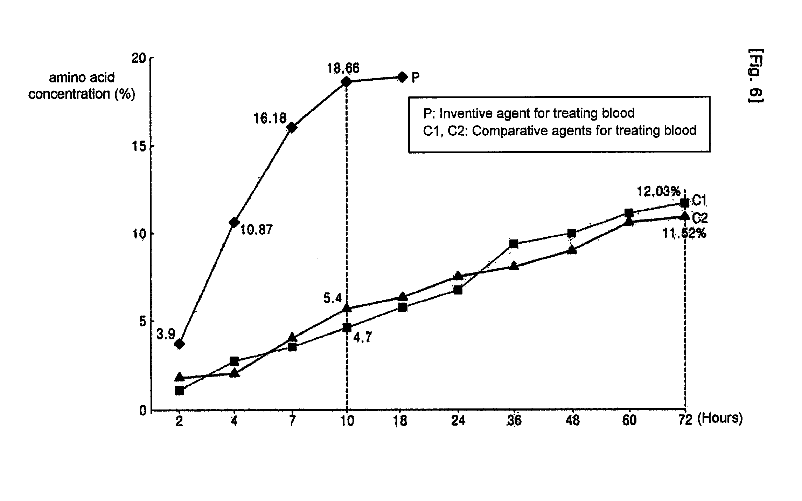

FIG. 6 graphically shows the amino acid production rate in the case in which the liquid microbial agent for treating blood according to the present invention was used, in comparison with those in the case in which existing products (C1 and C2) marketed by Japanese companies were used.

### DETAILED DESCRIPTION OF THE INVENTION

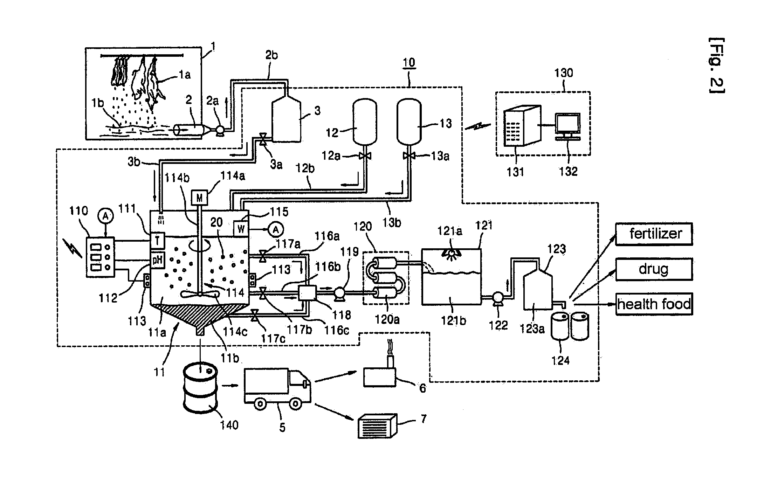

Hereinafter, the construction and effect of a system for treating the blood of slaughtered animals according to the present invention and a method of producing a high-quality amino acid solution from the blood of slaughtered animals will be described in detail with reference to the accompanying drawings. In FIGS. 2 to 4 illustrating the present invention, the same reference numerals are used for the same elements as those in the prior art (FIG. 1).

FIG. 2 shows a system 10 for treating the blood of slaughtered animals according to the present invention. Referring to FIG. 2, in the inventive system 10 for treating the blood of slaughtered animals, an animal blood flowing out from a slaughter plant 1 is collected through a blood collection pipe 2, and then temporarily stored in a blood storage tank 3. Because the animal blood should not be spoiled, it should be transferred from the slaughter plant in a cold state and stored in the blood storage tank in a cold state. The animal blood stored in the blood storage tank 3 is transferred to a blood treatment tank 11 through a blood supply pipe 3b.

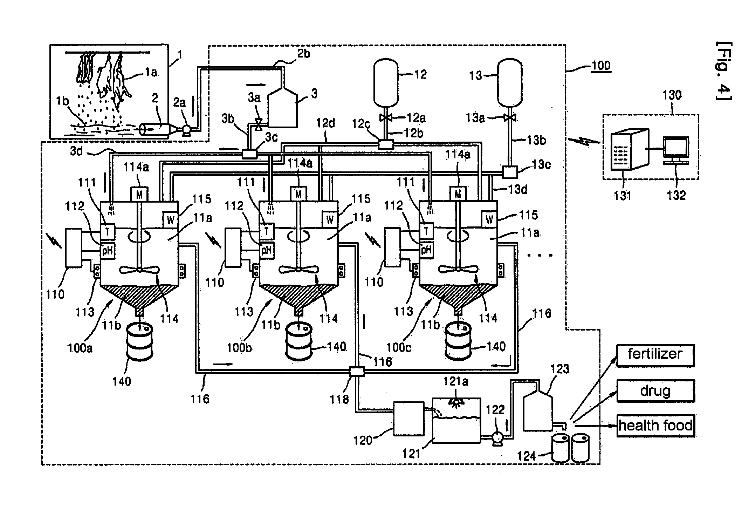

Because the inventive system 10 for treating animal blood is preferably placed directly aside the slaughter plant 1, it may appear that the animal blood flowing out from the slaughter plant 1 is introduced directly into the blood treatment tank 11 without time delay. The blood treatment tank 11 may preferably have a volume of about 100-200 liters, and the volume of the blood treatment tank 11 may also be increased or decreased depending on the amount of animal blood occurring in the slaughter plant. Also, as shown in FIG. 4, a plurality of blood treatment tanks 100a, 100b and 100c may be arranged in parallel, so that when any one blood treatment tank is completely filled, the animal blood can be supplied to another blood treatment tank, whereby the animal blood can be continuously treated without being delayed in the blood storage tank for a long time.

In FIG. 2, a stirrer 114 is provided in the blood treatment tank 11, and the stirrer 114 is rotated at a speed of about 20-40 rpm to prevent the blood in the blood treatment tank 11 from coagulating. As is well known in the art, because animal blood contains platelets, it coagulates upon contact with air. Thus, to prevent the animal blood from coagulating, the animal blood should be continuously stirred. According to the experimental results obtained by the present inventors, it was shown that the stirrer is most preferably rotated at a speed of 25 rpm.

The stirrer 114 comprises: a driving motor 114a disposed outside the blood treatment tank 11; a stirrer shaft 114b connected with the driving motor 114a to transfer rotational power; and a stirrer impeller 114c placed on the stirrer shaft 114b to stir the animal blood.

The blood treatment tank 11 includes a temperature sensor 111, a pH measurement sensor 112, and a level sensor 115 for sensing the level of liquid such as blood. These sensors 111, 112 and 115 are either connected integrally with the blood treatment tank 11 or provided near the blood treatment tank 11 to transfer an input signal to a control unit 110. Meanwhile, the blood treatment tank 11 is provided with a heater 113, so that the internal temperature of the blood treatment tank 11 can be controlled by the operation of the heater 113.

As will be described later, a blood treating agent consisting of microorganisms is introduced into the blood treatment tank 11, so that the organic substances of the blood are degraded by the proliferation and enzymatic reaction of the microorganisms. Thus, the internal temperature and pH concentration of the blood treatment tank 11 should be maintained at levels optimal for the proliferation and enzymatic reaction of microorganisms 20. For example, the temperature of the blood treatment tank is preferably maintained at 25~35 °C suitable for the enzymatic reaction, and needs to be maintained at a pH environment that can cause an optimal enzymatic reaction, depending on the properties of microorganisms and enzymes used.

For this purpose, signals by the temperature sensor 111 and the pH measurement sensor 112 are transmitted to the control unit 110 which operates the heater 113 to maintain the temperature of the blood 110a within the desired range, and separate chemicals (not shown) capable of adjusting pH are introduced into the blood treatment tank so that the pH of the blood 110a can be maintained at a suitable level.

Also, a signal sensed by the level sensor 115 is transmitted to the control unit 110, whereby the control unit 110 can determine the amount of blood in the blood treatment tank 11, can determine the supply of blood 1 10a according to preset program, and can determine the supply of the microbial agent for treating blood and the supply of water. Also, the control unit 110 may be designed so that it has a function of controlling the driving speed of a stirrer 114.

Meanwhile, in order to biologically treat the blood 110a in the blood treatment tank 11, the system 10 for treating animal blood comprises a blood-treating agent supply unit 12 for supplying the liquid microbial agent for treating blood and a water supply unit 13 for water required for the enzymatic reaction of microorganisms. The liquid microbial agent in the blood-treating agent supply unit 12 is introduced into the blood treatment tank 11 through a blood-treating agent supply pipe 12b, and water discharged from the water supply unit 13 is supplied to the blood treatment tank 11 through a water supply pipe 13b. In FIG. 2, reference numerals 12a and 13a indicate valves connected with the blood-treating agent supply unit 12 and the water supply agent, respectively.

Meanwhile, the liquid microbial agent for treating blood which is supplied from the blood-treating agent supply unit 12 to the blood treatment tank 11 is a new microbial mixture developed by the present inventors by mixing cultures containing microorganisms, including bacillus microorganisms extracted from substances such as Cheonggukjang. The liquid microbial agent for treating blood performs a function of completely degrading the animal blood within 10 hours to separate the animal blood into an upper layer of amino acid solution and a lower layer of waste blood sludge.

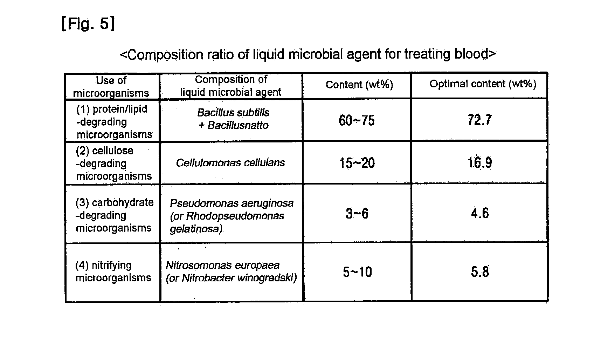

As shown in the table of FIG. 5, the liquid microbial agent for treating blood which is used for the treatment of animal blood in the present invention contains protein-degrading microorganisms, cellulose-degrading microorganisms, carbohydrate-degrading microorganisms, and nitrifying microorganisms. Animal blood is composed of a liquid plasma component and blood cells, including white blood cells, red blood cells and platelets. Among these components, the plasma consists of 90% water, 9% plasma protein and 1% inorganic salts, and the blood cells consist mainly of protein and contain trace amounts of sugar, fat and cellulose. Thus, in order to effectively separate animal blood into a soluble component and a sludge, it appears to be most important to make a microbial agent for treating blood by extracting and culturing microorganisms producing enzymes that can degrade the organic substances (protein, lipid, cellulose, carbohydrate, etc.) of blood and mixing the microorganisms with each other at an optimal ratio.

The liquid microbial agent for treating blood which is used in the present invention contains: (1) *Bacillus* sp. microorganisms as protein/lipid-degrading microorganisms; (2) *Cellulomonas* sp. microorganisms as cellulose-degrading microorganisms; (3) *Pseudomonas* sp. or *Rhodopseudomonas* sp. microorganisms as carbohydrate-degrading microorganisms; and (4) *Nitrosomonas* sp. or *Nitrobacter* sp. microorganisms as nitrifying microorganisms.

The above-described microorganisms which are used in the liquid microbial agent for treating blood are present in the form of cultures, and cultures of the microorganisms are mixed with each other at a suitable ratio to prepare the liquid microbial agent for treating blood. A preferred embodiment of the present invention will now be described with reference to FIG. 5. As protein/lipid-degrading microorganisms, a 1:1 mixture of *Bacillus subtilis* and *Bacillusnatto* is used, and as cellulose-degrading microorganisms, *Cellulomonas cellulans* is used. Also, as carbohydrate-degrading microorganisms, *Pseudomonas aeruginosa* or *Rhodopseudomonas gelatinosa* is used, and as nitrifying microorganisms, *Nitrosomonas europaea* or *Nitrobacter winogradski* is used.

In the present invention, when microorganisms 20 which are used in the liquid microbial agent for treating blood are introduced into blood, they grow using the components of the blood while producing specific enzymes which cause catalysis to degrade proteins into smaller components such as amino acids. For example, *Bacillus subtilis* and *Bacillusnatto* which are used as protein/lipid-degrading microorganisms in the present invention are microorganisms isolated from Cheonggukjang, a Korean traditional fermented food, and produce protein-degrading enzymes such as protease or metalloprotease, which are fibrinolytic enzymes functioning to degrade the protein and lipid components into amino acids. Likewise, cellulose-degrading microorganisms, carbohydrate-degrading microorganisms and nitrifying microorganisms produce the respective enzymes which function to degrade the organic components of blood into smaller substances.

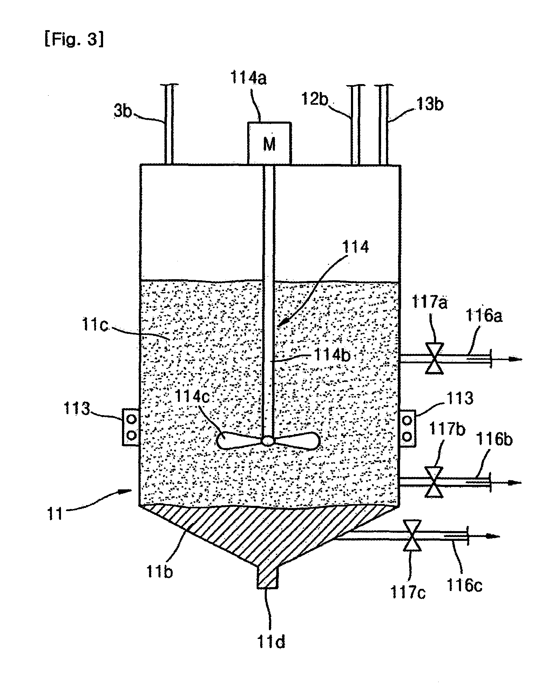

FIG. 3 shows a state in which animal blood was separated into a high-quality amino acid solution and a waste blood sludge by the reaction of microorganisms in the blood treatment tank 11. In FIG. 3, the amino acid solution 11c has a clear and transparent appearance, and the waste blood sludge 11b has a dark red appearance, in which the amino acid solution 11c and the waste blood sludge 11b are present as clearly separated layers.

Referring to FIGS. 2 and 3, in the system 10 for treating animal blood according to the present invention, the liquid microbial agent for treating blood is allowed to react with blood in the blood treatment tank 11 so as to separate the blood into an upper layer of amino acid solution 11c c and a lower layer of waste blood sludge 11b. After the blood has been separated into the upper layer of liquid and the lower layer of sludge as described above, the sludge 11b is discharged through a sludge outlet 11d provided at the lower end of the blood treatment tank 11, and the discharged sludge 11b is put in blood barrels 140 and transferred to an incineration plant 6 or a wastewater disposal plant 7 by a car 5.

Meanwhile, the amino acid solution 11c obtained by treating the blood in the blood treatment tank 11 according to the present invention is discharged through discharge pipes 116a, 116b and 116c provided at the side of the blood treatment tank 11, after which it is filtered in a filtering means 120 to remove impurities and sterilized in a sterilizing means 121. After sterilization, the amino acid solution 123a is temporarily stored in an amino acid storage means 123, after which it may be put in storage vessels 124 and transferred and used for various applications.

Referring to FIGS. 2 and 3, a plurality of discharge pipes 116a, 116b and 116c are provided at the side of the blood treatment tank 11, and the discharge pipes should not be necessarily provided in plurality. However, because the blood in the blood treatment tank 11 is separated into a supernatant (amino acid liquid 11c) and a lower layer of sludge 11d, it is believed to be preferable that discharge pipes for discharging the supernatant 11c be separately provided at locations of different heights in order to effectively discharge the amino acid liquid and the sludge to the outside. Alternatively, it is also possible to provide only the lowest discharge pipe 16c such that the lower layer of sludge 11b is completely discharged through a sludge outlet 11d, after which the supernatant (amino acid liquid) is discharged through the lowest discharge pipe 116c. In FIGS. 2 and 3, reference numerals 117a, 117b and 117c indicate valves coupled to the discharge pipes 116a, 116b and 116c, respectively.

The liquids of the discharge pipes 116a, 116b and 116c are combined into one solution by a multi-valve unit 118 and pressurized by a transfer pump 119, after which the liquid is transferred to the filtering means 120. The filtering means 120 includes at least one filter element 120a, so that the amino acid liquid 11c is passed through the filter element 120a while impurities are removed from the amino acid liquid 11c.

After the amino acid solution 121b has been passed through the filtering means 120, it is sterilized in a sterilizing means 121. Because blood is infectious waste and rich in organic matter, harmful bacteria are likely to propagate in blood. For this reason, blood needs to be sterilized in the sterilizing means 121 to remove bacteria.

The sterilizing means 121 performs a function of killing bacteria using a sterilizer such as an UV light sterilizer 121a or an ozone sterilizer (not shown).

After the amino acid solution has been passed through the sterilizing means 121, a highly purified, sanitarily sterilized amino acid solution containing 18 essential amino acids uniformly dissolved therein is obtained. According to the experimental results obtained by the present inventors, it was shown that the concentration of amino acids in the amino acid solution reached 18.66%. The amino acid solution, passed through the sterilizing means 121, is pressurized by the transfer pump 122 and cold-stored in the amino acid storage tank 123, and it may be used for various applications, including a raw material for liquid fertilizers, drugs or health foods.

Meanwhile, in the present invention, the operating conditions (temperature, pH, stirring speed, etc.) of the blood treatment tank 11 are controlled by control units 110, in which the control units 110 separately placed at a site are connected with a server, placed at a central control center, by internet or communication cables, so that they can be remote controlled. For example, in the case in which a plurality of blood treatment tanks 100a, 100b and 100c are provided in the inventive blood treatment system 100 as shown in FIG. 4, the control units 110 for the respective blood treatment tanks 100a, 100b and 100c can be combined into one network, so that they can be remote-controlled and monitored in the control center 130. Also, in the case in which the system 10 for treating animal blood according to the present invention is installed in each of slaughter plants, a central control center 130 for remote controlling the blood treatment systems 10 installed in the slaughter plants can be established, so that the systems 10 can be integrally remote-connected in the central control center. In FIG. 2, a sever 131 remote-connected with each control unit 110 is present in the control center, and a manager can be connected with the server through a terminal 132 to control the operation of the server.

FIG. 4 shows a system 100 for treating animal blood according to another embodiment of the present invention, in which a plurality of blood treatment tanks 100a, 100b and 100c are arranged in parallel, so that the system 100 can continuously receive and treat an animal blood 1b flowing out from the slaughter plant 1.

The blood treatment system 100 shown in FIG. 4 differs from the blood treatment system 10 of FIG. 2 in that the blood treatment tanks 100a, 100b and 100c are arranged in plurality in parallel.

The time taken for microorganisms to complete the degradation of blood in the blood treatment tanks 11, 100a, 100b, 100c of the present invention is about 10 hours. In the case in which only one blood treatment tank 11 is present as shown in FIG. 2, if the blood treatment tank 11 is completely filled, it can no longer receive animal blood, and thus animal blood flowing out from the slaughter plant should stay in the storage tank 3. Of cause, even though blood is not spoiled because the blood storage tank 3 is maintained in a cold state, it is preferable that blood be treated as soon as possible after the occurrence thereof For this reason, it is believed to be more preferable that a plurality of blood treatment tanks 110a, 110b and 1 10c be placed as shown in FIG. 4, so that when any one blood treatment tank 110a is completely filled, animal blood is sent to and treated in other blood treatment tanks 100b and 100c. If several blood treatment tanks are placed in a batch type as described above, the blood treatment system 100 of the present invention can exhibit the effect of continuously treating the blood 1b flowing out from the slaughter plant 1.

Referring to FIG. 4, a plurality of blood treatment tanks 100a, 100b and 100c are placed, and pipe facilities for supplying blood, the microbial agent and water to each of the blood treatment tanks are also provided. The blood storage tank 3 is connected with the plurality of blood treatment tanks 100a, 100b and 100c by blood supply pipes 3d, and the supply of blood to each channel is performed by a multi-valve unit 3c. Also, the blood-treating agent supply unit 12 and the water supply unit 13 are connected with the plurality of blood treatment tanks 100a, 100b and 100c by the blood-treating agent supply pipes 12d and the water supply pipes 13d, and the supply of the blood-treating agent and water through each channel is determined by the multi-valves 12c and 13c.

The amino acid liquid which is discharged as a supernatant from the blood treatment tanks 100a, 110b and 110c is supplied to the filtering means 120 through discharge pipes 116 and a multi-valve unit 118, and then passed through the sterilizing means 121 and the amino acid storage tank 123 and used for various applications, as described with respect to FIG. 2.

FIG. 5 illustrates the composition ratio of a liquid microbial agent for treating blood which is used for the treatment of blood in the system for treating the blood of slaughtered animals according to the present invention. The liquid microbial agent for treating blood which is used in one embodiment of the present invention preferably contains: 60-75 wt% of a 1:1 mixture of a *Bacillus subtilis* culture and a *Bacillusnatto* culture as protein/lipid-degrading microorganisms; 15-20 wt% of a *Cellulomonas cellulans* culture as cellulose-degrading microorganisms; 3-6 wt% of a *Pseudomonas aeruginosa* culture as carbohydrate-degrading microorganisms; and 5-10 wt% of a *Nitrosomonas europaea* culture as nitrifying microorganisms. Herein, *Rhodopseudomonas gelatinosa* may be used instead of the *Pseudomonas aeruginosa,* and *Nitrobacter winogradski* may be used instead of the *Nitrosomonas europaea.*

Not only the blood-treating agent but also water is introduced into the blood treatment tank 11, in which the amount of the blood-treating agent is preferably determined in the range of 0.5-5 liter per 100 liters of blood, and the amount of the water is preferably determined in the range of 5-20 liters per 100 liters of blood. According to the experimental results obtained by the present inventors, it was shown that the most preferable result was obtained when the microbial agent for treating blood was introduced in an amount of 1 liter per 100 liters of blood to be treated and water was introduced in an amount of 10 liters per 100 liters of blood.

In an example of the present invention, the composition of the liquid microbial agent for treating blood preferably contains 60-75 wt% of a 1:1 mixture of a *Bacillus subtilis* culture and a *Bacillusnatto* culture as the protein/lipid-degrading microorganism culture, 15-20 wt% of a *Cellulomonas cellulans* culture as the cellulose-degrading microorganism culture, 3-6 wt% of a *Pseudomonas aeruginosa* culture as the carbohydrate-degrading microorganism culture, and 5-10 wt% of a *Nitrosomonas europaea* culture as the nitrifying microorganism culture. Herein, *Rhodopseudomonas gelatinosa* may be used instead of the *Pseudomonas aeruginosa,* and *Nitrobacter winogradski* may be used instead of the *Nitrosomonas europaea.*

And, not only the blood-treating agent but also water is introduced into the blood treatment tank 11, in which the amount of the blood-treating agent is preferably determined in the range of 0.5-5 liter per 100 liters of blood, and the amount of the water is preferably determined in the range of 5-20 liters per 100 liters of blood. According to the experimental results obtained by the present inventors, it was shown that the most preferable result was obtained when the microbial agent for treating blood was introduced in an amount of 1 liter per 100 liters of blood to be treated and water was introduced in an amount of 10 liters per 100 liters of blood to be treated.

Also, in the other experiment conducted by the present inventors, the composition of the liquid microbial agent for treating blood contains 72.7 wt% of a 1:1 mixture of a *Bacillus subtilis* culture and a *Bacillusnatto* culture, 16.9 wt% of a *Cellulomonas cellulans* culture, 4.6 wt% of a *Pseudomonas aeruginosa* or *Rhodopseudomonas gelatinosa* culture, and a *Nitrosomonas europaea* or *Nitrobacter winogradski* culture.

Those experimental results indicated that the inventive system for treating blood and the inventive method for producing amino acids could achieve significantly excellent effects compared to the methods of the prior art.

The system for treating the blood of slaughtered animals according to the present invention can be placed as a compact form in slaughter plants throughout the nation, so that the system can immediately treat animal blood flowing out from the slaughter plants, thereby producing an amino acid liquid.

According to the present invention, animal blood can be mostly used to produce amino acids which can be used for agricultural fertilizers, so that the cost to purchase fertilizers required for agricultural production can be significantly reduced. Also, the amount of animal blood to be incinerated or disposed of in a wastewater disposed plant can be significantly reduced, thereby reducing the disposal cost of animal blood and greatly reducing the risk of environmental contamination caused by animal blood.

Moreover, in the present invention, a method of degrading animal blood using natural microorganisms is used to treat the animal blood without using a chemical degradation method that uses harmful chemicals, and thus an environmentally friendly amino acid liquid fertilizer containing high concentrations of natural microorganisms, 18 amino acids and minerals can be obtained. Accordingly, when the present invention is applied to the agricultural, food and drug fields, it has advantages in that it has excellent effects and is environmentally friendly.

Amino acids which are obtained using the system for treating animal blood according to the present invention can be used in various applications, including foods, feed additives, drugs, animal drugs, cosmetics and agricultural chemicals. In a brief description of the relationship between amino acids and plants, amino acids are synthesized in plants, stored in a protein form and used in various applications, including physiological activity, and thus amino acids provide a nutrient source for soil microorganisms, activate the growth of microorganisms and increase the root growth of plants.

In modem agriculture, the utilization of agricultural land is increased so that the fertility of soil is easily lost. Thus, fertilizers play a very important role. Fertilizers consist of 3 elements: nitrogen, phosphoric acid and potassium. The amino acid liquid that is produced by the present invention contains nitrogen, phosphoric acid and potassium, and thus greatly assists in the growth of plants. Particularly, when the amino acid liquid that is produced by the present invention is used as a nitrogen source, it has the effects of promoting the growth of agricultural crops and preventing damages by blight and harmful insects. Also, when the amino acids according to the present invention are absorbed into the root of plants, they advantageously show good growth compared to inorganic nitrogen and can exhibit the effects of overcoming physiological disorders, inhibiting the growth of pathogens and increasing sugar contents.

The amino acid liquid fertilizer produced according to the present invention provide necessary components directly into plants without undergoing a biosynthesis process in the plants, and thus the effects thereof are fast, the various physiological activities are enhanced and the rates of absorption and migration into plants are very fast. Also, the amino acid liquid fertilizer according to the present invention has the effect of promoting the activation of useful microorganisms in soil to improve the physical, biological and chemical properties of the soil.

Also, the amino acid solution which is produced according to the present invention can be widely used in industrial applications. For example, it can be used in various applications, including seasonings, food additives, drugs, diet supplements and tonics.

If the system of the present invention is installed in slaughter plants throughout the nation, useful substances can be produced using livestock blood, which is a huge amount of a byproduct occurring in the livestock industry. Thus, in meat production companies, the disposal cost of the livestock blood can be reduced, thereby increasing the income. Also, because the blood containing a high concentration of protein is recycled as a resource without being disposed of, economic loss caused by the disposal of the animal blood can be fundamentally blocked.

In addition, the blood treatment system according to the present invention can be exported to areas, such as Southeast Asia, which are highly based on agriculture and in which slaughter plants have not yet been modernized, whereby it can contribute to the obtaining of foreign money and can have a good effect on the economy of our country. In the countries of Southeast Asia, livestock industry and agriculture are in an advanced state, but animal blood occurring in slaughter plants are disposed of to cause contamination, and fertilizers for use in the agricultural field are deficient. Thus, if the plant system according to the present invention is constructed in a compact form in the countries of Southeast Asia, it will have a good effect on both the livestock industry and the agricultural industry.

As a result, the amino acid liquid fertilizer which is produced according to the present invention is a completely environmentally friendly product which can be used without anxiety. Particularly, due to recent increasing interest in food safety, environmentally friendly agriculture has significantly advanced, and thus the amino acid liquid fertilizer of the present invention can attract a great deal of attention. Also, because raw material prices and fertilizer prices have recently increased due to an increase in international crude oil price, the present invention can advantageously present a significantly profitable business model.

The system for treating the blood of slaughtered animals according to the present invention can be installed near each slaughter plant in such a manner as to be connected to the slaughter plant, and thus it can completely degrade the blood of domestic animals within 10 hours, thereby maximizing the efficiency of the treatment system. Also, when animal blood is treated using the system of the present invention, a high-quality amino acid solution containing a high concentration (18.66% or more) of 18 essential amino acids can be obtained as a product. This high-quality amino acid solution can be used as an environmentally friendly fertilizer, and thus the present invention can provide the effects of recycling animal blood as a resource and preventing environmental contamination caused by animal blood.

Also, the inventive system for treating the blood of slaughtered animals and the inventive method of producing amino acids using the blood of slaughtered animals can solve both the problem of disposing of waste animal blood, which was a problem difficult to solve in the prior livestock industry, and the problem of obtaining a quality-quality inexpensive fertilizer, which was a problem difficult to solve in the prior agricultural field. Thus, the present invention can provide a high-value-added new business item which is highly profitable in economic terms in both in the livestock industry and the agricultural industry.

Although the preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A system for treating the blood of slaughtered animals, the system comprising:
a storage tank for collecting and storing the blood of animals slaughtered in a slaughter plant;
a blood treatment tank in which the animal blood is received and stored from the blood storage tank and into which a liquid microbial agent for treating blood is introduced so that microorganisms of the liquid microbial agent are allowed to react at a temperature of 25~35 °C for 8-12 hours, thereby separating the animal blood into an amino acid solution and a waste blood sludge;
a blood-treating agent supply unit for supplying the liquid microbial agent to the blood treatment tank;
a water supply unit for supplying water to the blood treatment tank;
a filtering means for filtering the amino acid solution discharged from the blood treatment tank to remove impurities;
a heater for maintaining the blood treatment tank at a temperature of 25~35 °C; and
a temperature sensor for sensing the internal temperature of the blood treatment tank.

2. The system of claim 1, further comprising:
a sterilizing means for sterilizing the amino acid solution passed through the filtering means; and
an amino acid storage means for storing the sterilized amino acid solution.

3. The system of claim 1, further comprising:
a pH sensor for measuring the internal pH of the blood treatment tank;
a level sensor for measuring the level of liquid in the blood treatment tank; and
a control unit which receives signals from the temperature sensor, the pH sensor and the level sensor and controls a reaction process in the blood treatment tank.

4. The system of claim 1, wherein the blood treatment tank comprises a stirrer which stirs the animal blood in the blood treatment tank at a speed of 20-40 rpm.

5. The system of claim 1, wherein the liquid microbial agent for treating blood comprises:
a protein/lipid-degrading microorganism culture containing Bacillus sp. microorganisms;
a cellulose-degrading microorganism culture containing Cellulomonas sp. microorganisms;
a carbohydrate-degrading microorganism culture containing microorganisms belonging to a first microorganism group consisting of Pseudomonas sp. and Rhodopseudomonas sp.; and
a nitrifying microorganism culture containing microorganisms belonging to a second microorganism group consisting of Nitrosomonas sp. and Nitrobacter sp.

6. The system of claim 5, wherein the liquid microbial agent for treating blood comprises 60-75 wt% of the protein/lipid-degrading microorganism culture, 15-20 wt% of the cellulose-degrading microorganism culture, 3-6 wt% of the carbohydrate-degrading microorganism culture, and 5-10 wt% of the nitrifying microorganism culture.

7. The system of any one of claims 1 to 6, wherein the amount of the liquid microbial agent for treating blood which is introduced into the blood treatment tank corresponds to 0.5-5 wt% of the animal blood which is treated in the blood treatment tank, and the amount of water which is introduced into the blood treatment tank corresponds to 5-20 wt% of the animal blood which is treated in the blood treatment tank.

8. A method for producing a high-quality amino acid solution using the blood of slaughtered animals, the method comprising the steps of
collecting and storing the blood of animals slaughtered in a slaughter plant;
supplying each of a liquid microbial agent for treating blood and of water to the animal blood at a ratio of 0.5-5 wt% and allowing microorganisms of the liquid microbial agent to react at a temperature of 25~35 °C for 8-12 hours, thereby separating the animal blood into an amino acid solution and a waste blood sludge;
filtering the amino acid solution separated from the animal solution to remove impurities; and
sterilizing the amino acid solution, thereby producing an amino acid solution containing 18.66 wt% of 18 essential amino acids.
